# EUROPEAN PATENT APPLICATION

(11) **EP 3 620 728 A1**
(43) Date of publication of application: **11.03.2020**
(21) Application number: 19195865.1
(22) Date of filing: 06.09.2019
(51) Int. Cl.: F25B 41/06, F16K 1/52, F16K 39/02, B60H 1/32

(54) **MOTOR OPERATED VALVE**

(30) Priority: 10.09.2018 JP 2018169017
(71) Applicant: TGK CO., Ltd., Tokyo 193-0942 (JP)
(72) Inventor: SAEKI, Shinji, Tokyo, 193-0942 (JP); MIURA, Youichi, Tokyo, 193-0942 (JP); YUASA, Tomohiro, Tokyo, 193-0942 (JP)
(74) Representative: Schröer, Gernot H.

(57) **Abstract**

A motor operated valve (100) includes: a first valve element (246) that moves toward and away from a first valve hole (254) to close and open a first valve (244); a motor (400) including a rotor (210) for driving the first valve element in the opening and closing directions of the first valve; a shaft (212) connected coaxially with the rotor; a second valve element (250) that is provided coaxially with the shaft and coaxially with the first valve element, and moves toward and away from a second valve hole (272) to close and open a second valve (248); a first spring (268) for biasing the first valve element in the closing direction of the first valve; and a second spring (280) provided coaxially with the first spring, for biasing the second valve element in the closing direction of the second valve.

## Description

The present invention relates to a motor operated valve including a plurality of valves positioned coaxially.

An automotive air conditioner typically includes a compressor, a condenser, an expander, an evaporator, and so forth arranged in a refrigeration cycle. In such refrigeration cycles, control valves for controlling the flow of fluid, such as expansion valves serving as expanders, are used.

A motor operated valve including a plurality of valves with different diameters, which are arranged coaxially, and continuously open and close, is known as a control valve capable of precisely controlling a fluid flow (refer to Japanese Patent Application Publication No. H08-021554, for example). Such a motor operated valve includes a spring at an upper end of a valve element so as to achieve appropriate seating performance of the valve element on a valve seat when the valve is closed and to prevent galling.

### Related Art List

(1) Japanese Patent Application Publication No. H08-021554

This spring also has a function of reducing lateral runout of the valve element. In a case of an elongate valve element, however, the spring alone cannot sufficiently reduce lateral runout, and precise fluid flow control is difficult.

One of objects of the present invention is to provide a motor operated valve in which lateral runout of a valve element is reduced.

A motor operated valve according to the present invention includes: a body having an inlet port through which a fluid is introduced from an upstream side, an outlet port through which the fluid is delivered to a downstream side, a first valve hole through which the inlet port and the outlet port communicate with each other, and a guiding passage formed coaxially with the first valve hole; a first valve element having an inflow port communicating with the inlet port, an outflow port communicating with the outlet port, and a second valve hole formed coaxially with the first valve hole in a passage connecting the inflow port with the outflow port, the first valve element being slidably supported in the guiding passage and moving toward and away from the first valve hole to close and open a first valve; a motor including a rotor for driving the first valve element in opening and closing directions of the first valve; a shaft connected coaxially with the rotor; a second valve element provided integrally with the shaft and coaxially with the first valve element, the second valve element moving toward and away from the second valve hole to close and open a second valve; a first spring to bias the first valve element in a closing direction of the first valve; a second spring provided coaxially with the first spring, to bias the second valve element in a closing direction of the second valve; a screw feed mechanism to convert rotational movement of the rotor into translational movement of the shaft; and an operably coupling mechanism to operably couple the first valve element and the second valve element in a manner that the first valve element and the second valve element can move integrally with each other when an amount by which the second valve element is lifted is equal to or larger than a predetermined value.
FIG. 1 is a cross-sectional view of an overall structure of a motor operated valve according to a first embodiment;
FIG. 2 is an enlarged cross-sectional view of part X when both of a first valve and a second valve are in closed states;
FIG. 3 is an enlarged cross-sectional view of the part X when only the second valve in an open state;
FIG. 4 is an enlarged cross-sectional view of the part X when both of the first valve and the second valve are in the open states;
FIG. 5 is an enlarged cross-sectional view around valve sections of a motor operated valve according to a modification of the first embodiment;
FIG. 6 is an enlarged cross-sectional view around valve sections of a motor operated valve according to a second embodiment;
FIG. 7 is an enlarged cross-sectional view around valve sections of a motor operated valve according to a modification of the second embodiment;
FIG. 8A is an enlarged cross-sectional view of part A in FIG. 7; and FIG. 8B is an enlarged cross-sectional view of part B in FIG. 7.

Certain embodiments of the invention will now be described. The description is not intended to limit the scope of the present invention, but to exemplify the invention.

Embodiments of the present invention will now be described in detail with reference to the drawings. In the description below, for convenience of description, the positional relationship in each structure may be expressed with reference to how the structure is depicted in the drawings. In the following embodiments and modifications thereof, components that are substantially the same will be designated by the same reference numerals and redundant description thereof may be omitted as appropriate.

### [First Embodiment]

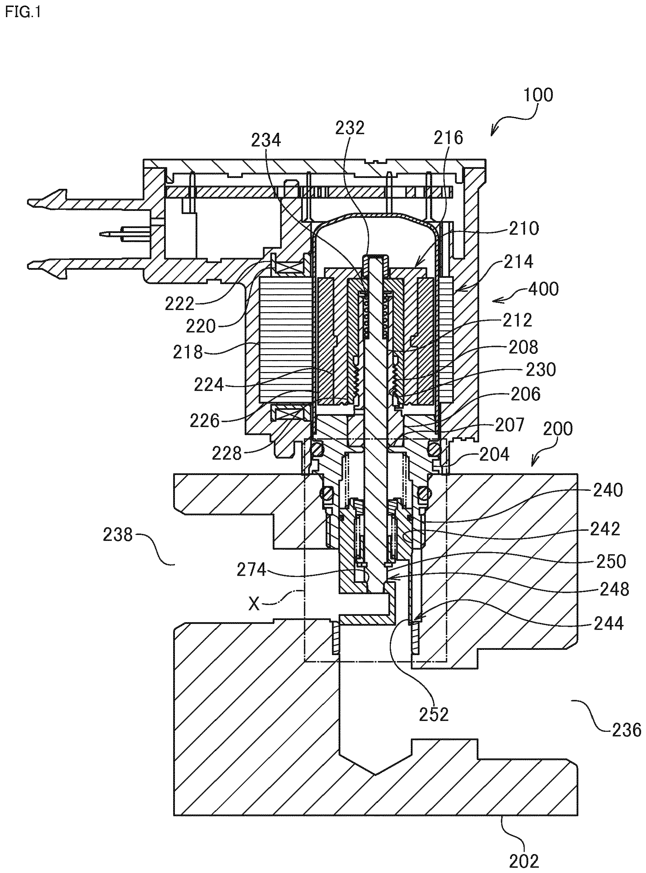

FIG. 1 is a cross-sectional view of an overall structure of a motor operated valve 100 according to a first embodiment.

As illustrated in FIG. 1, the motor operated valve 100, which is a motor operated expansion valve that functions as an expander, is constituted by an assembly of a valve unit 200 and a motor unit 400. The valve unit 200 includes a first body 202 having a bottomed cylindrical shape, and a second body 204 having a bottomed cylindrical shape. The valve unit 200 contains a large-diameter proportional valve (constituting a "first valve 244") and a small-diameter proportional valve (constituting a "second valve 248") arranged coaxially in the first body 202. A guiding member 206 is provided vertically at the center of upper part of the second body 204. An external thread portion 208 is formed on the outer surface of a middle portion in the axial direction of the guiding member 206. A lower end portion of the guiding member 206 has a large diameter, and this large-diameter portion is fixed coaxially to the center of upper part of the second body 204. A shaft 212 extending from a rotor 210 of the motor unit is inserted in the inner side of the second body 204. A lower end portion of the shaft 212 also serves as a second valve element 250 of the second valve 248. The guiding member 206 slidably supports the shaft 212 in the axial direction by the inner surface thereof, and rotatably and slidably supports a rotating shaft 228 of the rotor 210 by the outer surface thereof. A structure around the motor unit 400 will be described below.

The motor unit 400 includes the rotor 210 and a stator 214. The motor unit 400 includes a can 216 having a bottomed cylindrical shape. The rotor 210 is located inside the can 216, and the stator 214 is located outside of the can 216. The stator 214 includes a laminated core 218 and a coil 220. The laminated core 218 is constituted by disc-shaped cores stacked in the axial direction. A bobbin 222 around which the coil 220 is wound is mounted on salient poles formed on the inner side of the laminated core 218.

The rotor 210 includes a cylindrical rotor core 224, and a magnet 226 provided along the outer circumference of the rotor core 224. The rotor core 224 is mounted on the rotating shaft 228. The magnet 226 is magnetized with a plurality of poles in the circumferential direction.

The rotating shaft 228 is a cylindrical shaft having a bottomed cylindrical shape, mounted (outserted) around the guiding member 206, and having an open end facing downward. An internal thread portion 230 formed on the inner surface of the rotating shaft 228 engages with the external thread portion 208 of the guiding member 206. Such a screw feed mechanism converts rotational movement of the rotor 210 into translational movement of the shaft 212 in the axial direction, and the shaft 212 thus moves (is lifted upward) in the axial direction.

An upper portion of the shaft 212 is reduced in diameter, and the reduced-diameter portion extends through the bottom of the rotating shaft 228. An annular stopper 232 is fixed to the leading end of the reduced-diameter portion. A back spring 234 for biasing the shaft 212 downward (in the valve closing direction) is provided between the base end of the reduced-diameter portion and the bottom of the rotating shaft 228. In this structure, while the second valve 248 is being opened, the shaft 212 is moved integrally with the rotor 210, with the stopper 232 being locked by the bottom of the rotating shaft 228. In contrast, while the second valve 248 is being closed, the back spring 234 is compressed by reaction force that the second valve element 250 receives from a second valve seat 274. The second valve element 250 is pressed against the second valve seat 274 by the elastic reaction force of the back spring 234 in this process, which increases the seating performance (valve closing performance) of the second valve element 250.

An inlet port 236 is provided on one lateral side of the first body 202, and an outlet port 238 is provided on the other lateral side thereof. Fluid is introduced through the inlet port 236, and delivered out through the outlet port 238. The inlet port 236 and the outlet port 238 communicate with each other via an internal passage. A first valve seat 252 that serves as the valve seat of the first valve 244 is formed between the inlet port 236 and the internal passage (the first valve 244 will be described later).

The second body 204 is located on upper part of the first body 202. The second body 204 has a bottom portion 207 that separates the inside of the valve unit 200 from the inside of the motor unit 400. The second body 204 includes a cylindrical guiding portion 240 extending downward, and the inner surface of the guiding portion 240 forms a guiding passage 242.

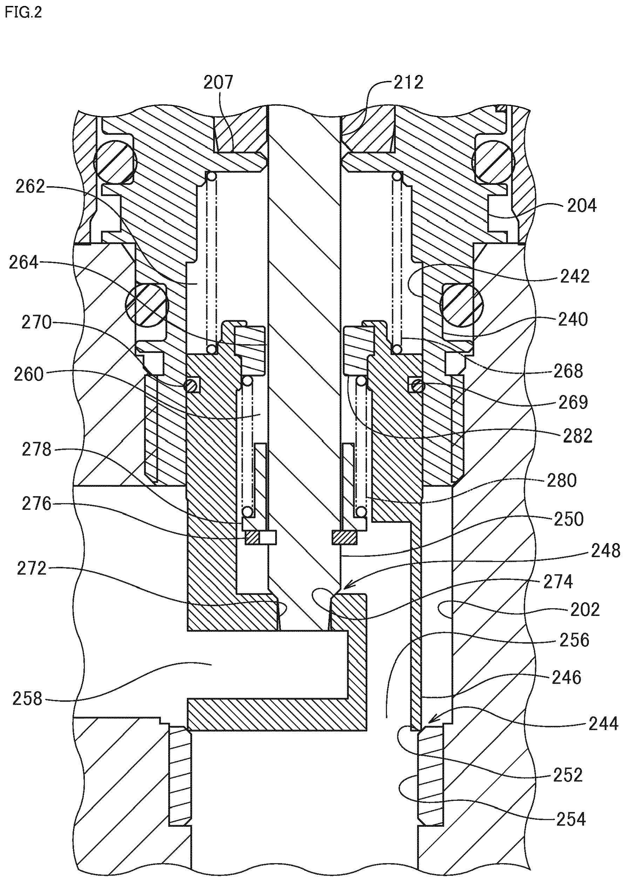

FIGS. 2 to 4 are enlarged cross-sectional views of part X in FIG. 1.

FIG. 2 illustrates a state in which both the first valve 244 and the second valve 248 are closed.

A first valve element 246 of the first valve 244 and the second valve element 250 of the second valve 248 are provided coaxially inside the first body 202. The first valve element 246 becomes seated on the first valve seat 252 formed on first body 202. The first valve element 246 moves toward and away from a first valve hole 254 to adjust the opening degree of the first valve 244. An inflow port 256 is provided at the bottom of the first valve element 246, and an outflow port 258 is provided on a lateral side thereof. The inflow port 256 communicates with the inlet port 236 of the first body 202, and the outflow port 258 communicates with the outlet port 238 thereof. The inflow port 256 and the outflow port 258 communicate with each other via a valve chamber 260. A back pressure chamber 262 is formed above the first valve element 246. An annular spring support 282 is joined by swaging to an upper end opening portion of the first valve element 246. A communication passage 264 is present between the spring support 282 and the shaft 212, through which the valve chamber 260 and the back pressure chamber 262 communicate with each other.

A first spring 268 for biasing the first valve element 246 in the closing direction of the first valve 244 is inserted between the bottom portion 207 of the second body 204 and the first valve element 246. The first spring 268 is provided coaxially with the shaft 212. An annular, first fitting portion 269 is formed on the outer surface of the first valve element 246, and a first seal ring 270 is fitted into the first fitting portion 269. The first seal ring 270 seals between the guiding passage 242 and the first valve element 246. The surface of the guiding passage 242 that comes in contact with the first seal ring 270 is coated with a lubricating plating layer, so that sliding resistance (friction) of the first seal ring 270 is reduced. For the material of the lubricating plating, a known lubricating plating material such as nickel-phosphorus (Ni-P) containing polytetrafluoroethylene (hereinafter also referred to as "PTFE") may be used.

In the motor operated valve 100, fluid introduced through the inlet port 236 is introduced into the back pressure chamber 262 via the inflow port 256, the valve chamber 260, and the communication passage 264. Thus, when the first valve 244 is closed, the pressure of the fluid is applied not only to the bottom of the first valve element 246 but also upward. The fluid pressure on the first valve 244 is therefore applied uniformly in the opening direction and the closing direction of the first valve 244. The pressure, in the opening direction of the first valve 244, of the fluid introduced through the inlet port 236 and the pressure in the valve closing direction in the back pressure chamber 262 substantially cancel each other out, which enables the load on the first spring 268 necessary for maintaining the valve closed state to be reduced.

A second valve hole 272 having a small diameter is formed on the inner side of the first valve element 246, and the upper end opening edge thereof serves as the second valve seat 274. The second valve element 250 moves toward and away from the second valve hole 272 to adjust the opening degree of the second valve 248. In the valve chamber 260, an E-ring 276 is fitted to a lower portion of the shaft 212. A bush 278 is provided on the E-ring 276. When the upper end of the bush 278 is in contact with the spring support 282, the second valve 248 is open at the maximum opening degree, and the first valve element 246 and the second valve element 250 can move integrally. Hereinafter, a state in which a valve is open at the maximum opening degree will be referred to as a "fully open state." In addition, a mechanism of the first valve element 246 and the second valve element 250 being operably coupled to each other and capable of moving integrally will be referred to as an "operably coupling mechanism." The opening degree of the second valve 248 (the amount by which the second valve element 250 is lifted) in the fully open state can be appropriately set by changing the shape of the bush 278.

A second spring 280 for biasing the second valve element 250 in the closing direction of the second valve 248 is inserted between the bush 278 and the spring support 282. The second spring 280 is provided coaxially with the first spring 268. In the present embodiment, because the lower end portion of the shaft 212 serves as the second valve element 250, the second spring 280 also biases the shaft 212 in the valve closing direction. The biasing force of the second spring 280 on the shaft 212 in the valve closing direction reduces looseness in the thrusting direction occurring between the external thread portion 208 and the internal thread portion 230 in FIG. 1.

In the motor operated valve 100, the second spring 280 is provided near the lower end portion of the shaft 212 (the second valve element 250). When the shaft 212 is displaced in a direction perpendicularly away from the axis by self-induced vibration or the like due to the fluid flow while the valve is opened, the second spring 280 applies a force on the shaft 212 toward the axis. Typically, a spring has a higher stiffness as the spring length is smaller when the material and the diameter are the same. Thus, when the spring displacement amounts are equal, a shorter spring has a greater force toward the axis than a longer spring. In the present embodiment, the second spring 280 that applies a force to the shaft 212 is provided on the first valve element 246 and in the valve chamber 260, and has a spring length smaller than the height of the valve chamber 260. When the spring displacement amounts are equal, the force of the second spring 280 having a small length applied on the shaft 212 toward the axis is greater than that of a second spring 284 of a motor operated valve 120 which has a larger length, which will be described later.

As one end, closer to the second valve 248, of the second spring 280 is closer to the second valve element 250, the shaft 212 is more stably maintained toward the axis. In the present embodiment, the second spring 280 is located near the second valve element 250 and effectively applies a force biasing the shaft 212 toward the axis. The force of the second spring 280 helps the shaft 212 keep centered along the axis near the lower end portion thereof. In this manner, the second spring 280 reduces lateral runout of the shaft 212 when the shaft 212 slides.

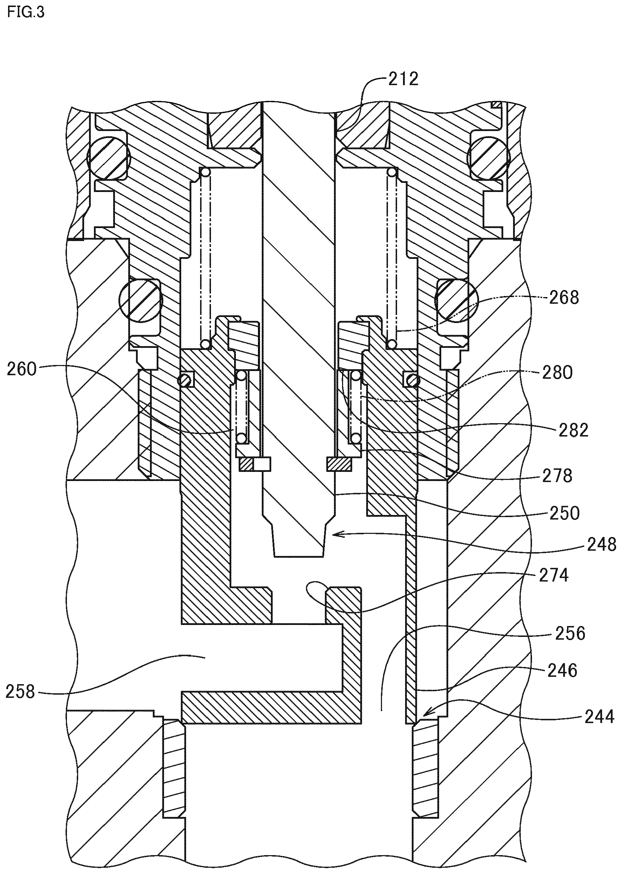

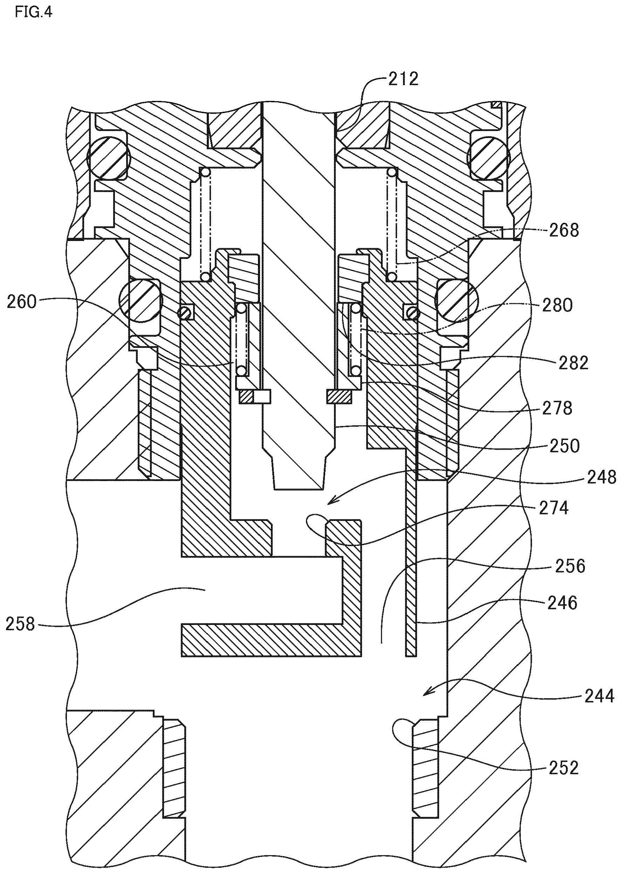

FIGS. 3 and 4 are cross-sectional views of the motor operated valve 100 in a case where the valves open and the fluid passes through the inside of the motor operated valve 100.

FIG. 3 illustrates a state in which the second valve 248 is open.

FIG. 4 illustrates a state in which both of the first valve 244 and the second valve 248 are open.

When the motor unit 400 is driven and the shaft 212 is started to move in the opening direction of the second valve 248 (upward in FIG. 3), the second valve element 250 leaves the second valve seat 274. This elastically deforms the second spring 280 in the compressing direction. When the second valve element 250 leaves the second valve seat 274, the fluid introduced through the inlet port, the inflow port 256, and the valve chamber 260 passes through the outflow port 258, and the outlet port in this order and exits.

When the upper end of the bush 278 reaches the spring support 282 as illustrated in FIG. 3, the second valve 248 is in the fully open state, and the second spring 280 has its minimum length.

When the shaft 212 continues being moved in the valve opening direction by the motor unit 400 while the second valve 248 is in the fully open state, the upper end of the bush 278 pushes the spring support 282, and the first valve element 246 leaves the first valve seat 252. This deforms the first spring 268 in the compressing direction, and the first valve 244 becomes in the open state (FIG. 4). When the first valve element 246 leaves the first valve seat 252, the fluid also takes a path from the inlet port directly to the outlet port without passing through the valve chamber 260, in addition to the path passing through the inflow port 256, the valve chamber 260, and the outflow port 258.

In a state where the second valve 248, which is a valve with a small diameter, is open and the first valve 244, which is a valve with a large diameter, is closed (FIG. 3), the amount of fluid flowing out through the outlet port 238 is small because only the valve with a small diameter is open. When the first valve 244 is also opened, the valve with a large diameter is open, and the amount of fluid flowing out through the outlet port 238 increases. This structure enables the motor operated valve 100 according to the present embodiment to increase the valve opening degree per one opening/closing operation.

The motor operated valve 100 of the present embodiment includes the lubricating plating layer on the surface of the guiding passage 242 that comes in contact with the first seal ring 270. This enables the sliding resistance of the first seal ring 270 to be decreased, and thus enables the elastic force of the first spring 268 for biasing the first valve element 246 in the valve closing direction to be decreased. As a result, less reaction force (a sum of the elastic force of the first spring 268 and the sliding resistance force of the first seal ring 270) acting on the shaft 212 is needed during the valve opening operation of the first valve element 246. Thus, the force for driving the shaft 212 in the valve opening direction can be reduced, and the load on the motor unit 400 can be reduced.

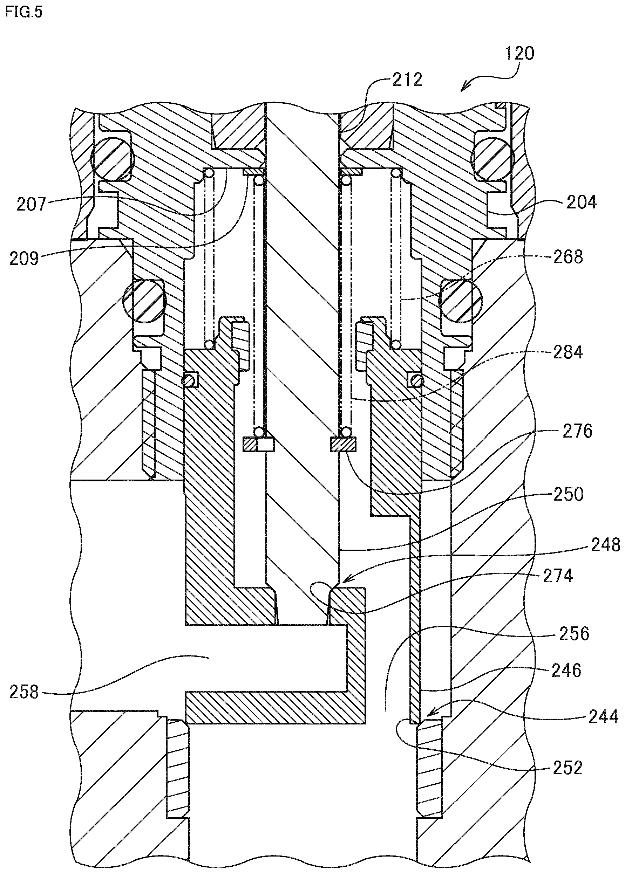

FIG. 5 is an enlarged cross-sectional view around valve sections of a motor operated valve 120 according to a modification of the first embodiment.

The motor operated valve 120 is different from the motor operated valve 100 of the first embodiment in the position of the second spring 284. In the motor operated valve 120, the second spring 284 is provided between the E-ring 276 of the shaft 212 and the second body 204. A spring support 209 for receiving the second spring 284 is provided at the bottom portion 207 of the second body 204, and is in contact with the second spring 284. In this embodiment as well, the first spring 268 biases the first valve element 246 in the closing direction, so that the first valve element 246 becomes reliably seated on the first valve seat 252. In addition, the second spring 284 biases the second valve element 250 in the closing direction, so that the second valve element 250 becomes reliably seated on the second valve seat 274. As a result, the valve closing performances of the first valve element 246 and the second valve element 250 in closing the first valve 244 and the second valve 248, respectively, are improved.

In the motor operated valve 120 as well, the second spring 284 reduces lateral runout of the shaft 212. The second spring 284, however, has a longer spring length than the second spring 280 of the motor operated valve 100, and one end, closer to the second valve 248, of the second spring 284 is farther from the second valve element 250 than that of the second spring 280. Thus, the second spring 280 of the motor operated valve 100 has a greater force biasing the shaft 212 toward the axis than the second spring 284 of the motor operated valve 120.

In the motor operated valve 100, when the upper end of the bush 278 reaches the spring support 282, the second spring 280 has its minimum length, and when the shaft 212 continues moving in the valve opening direction, only the first spring 268 is elastically deformed in the compressing direction to bring the first valve 244 into the open state. In contrast, in the motor operated valve 120, both the first spring 268 and the second spring 284 need to be elastically deformed when the first valve element 246 is lifted up. Because the biasing forces of the respective springs acting on the shaft 212 are greatest when the first valve element, which is a valve element of the valve with a large diameter, is lifted up, the biasing forces of the springs on the shaft 212 are greater in the motor operated valve 120 than in the motor operated valve 100. The burden on the motor unit 400 to drive the shaft 212 is greater in the motor operated valve 120 than in the motor operated valve 100.

### [Second Embodiment]

A second embodiment is different from the first embodiment in the passage of fluid to the back pressure chamber in the motor operated valve. The description below will be focused on the difference from the first embodiment.

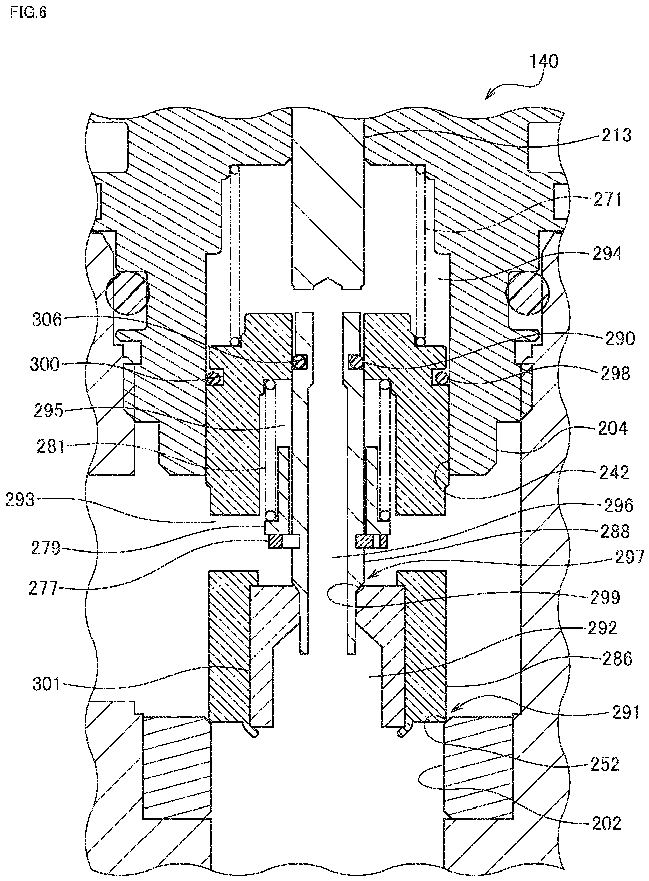

FIG. 6 is an enlarged view of valve sections of a motor operated valve 140 according to the second embodiment. An annular, first fitting portion 300 is formed on the outer surface of upper part of a first valve element 286 of the motor operated valve 140. A first seal ring 298 for sealing between the first valve element 286 and the second body 204 is fitted into the first fitting portion 300. Lubricating plating is applied to the surface of the second body 204 that comes in contact with the first seal ring 298 in the guiding passage 242.

A lower end portion of a shaft 213 also serves as a second valve element 288. An annular, second fitting portion 306 is formed on the outer surface of the second valve element 288. A second seal ring 290 for sealing between the first valve element 286 and the second valve element 288 are fitted into the second fitting portion 306. Lubricating plating is applied to the surface of the first valve element 286 that comes in contact with the second seal ring 290.

An E-ring 277 is fitted to the second valve element 288. A bush 279 is provided on the E-ring 277. A second spring 281 for biasing the second valve element 288 in the closing direction of a second valve 297 is provided between the bush 279 and the first valve element 286. The second spring 281 is inserted coaxially with the shaft 213. In addition, a first spring 271 for biasing the first valve element 286 in the closing direction of a first valve 291 is provided between the first valve element 286 and the second body 204. The first spring 271 is inserted coaxially with the shaft 213 and the second spring 281.

An inflow port 292 communicating with the inlet port of the first body 202 and an outflow port 293 communicating with the outlet port are provided inside the first valve element 286. A valve chamber 295 which accommodates the second valve element 288 and through which the inflow port 292 and the outflow port 293 communicate with each other is also formed inside the first valve element 286. A valve seat member 301 that forms a second valve seat 299 on which the second valve element 288 is seated is provided at the inflow port 292. The first valve 291 opens and closes by first valve element 286 leaving and touching the first valve seat 252. In addition, the second valve 297 opens and closes by the second valve element 288 leaving and touching the second valve seat 299.

A back pressure chamber 294 is formed above the first valve element 286. In addition, a communication passage 296 through which the inflow port 292 of the first valve element 286 and the back pressure chamber 294 communicate with each other is formed inside the second valve element 288.

In the present embodiment, fluid introduced through the inlet port 236 in FIG. 1 flows to the back pressure chamber 294 via the inflow port 292 and the communication passage 296. Thus, the first valve element 286 receives the pressure from the fluid in the upward direction in FIG. 6 at the lower part thereof, and the pressure from the fluid in the downward direction at the upper part thereof. The pressures of the fluid in the upward and downward directions of the first valve element 286 therefore substantially cancel each other out, which enables the first valve element 286 to maintain the valve closed state with a small load on the first spring 271.

In the motor operated valve 140, lubricating plating is applied to the surface of the guiding passage 242 that comes in contact with the first seal ring 298 and to the surface of the first valve element 286 that comes in contact with the second seal ring 290. This enables sealing between the second body 204 and the first valve element 286 while reducing the sliding resistance of the first seal ring 298, which reduces the elastic force of the first spring 271 for biasing the first valve element 286 in the valve closing direction. In addition, this enables sealing between the first valve element 286 and the second valve element 288 while reducing the sliding resistance of the second seal ring 290, which reduces the elastic force of the second spring 281 for biasing the second valve element 288 in the valve closing direction. As a result, the reaction force acting on the shaft 213 during the valve opening operation of the first valve element 286 and the second valve element 288 is reduced. Thus, the force for driving the shaft 213 in the valve opening direction can be reduced, and the load on the motor unit 400 can be reduced.

In the motor operated valve 140, the valve chamber 295 and the outflow port 293 communicate with each other even while the second valve 297 is closed. In the present embodiment, the second seal ring 290 seals between the first valve element 286 and second valve element 288 so that fluid having the upstream pressure is introduced into the back pressure chamber 294 but the fluid does not flow out through the outflow port while the second valve 297 is closed. As a result, the fluid flowing into the back pressure chamber 294 is prevented from flowing out to the valve chamber 295 through between the first valve element 286 and the second valve element 288.

In the motor operated valve 140 as well, when the shaft 213 is displaced in a direction away from the axis, the second spring 281 applies a force biasing the shaft 213 toward the axis. Because the stiffness of a spring is higher as the spring length is smaller as described above, a shorter spring has a greater force toward the axis than a longer spring. In the motor operated valve 140, the second spring 281 that applies a force on the shaft 213 is provided in the valve chamber 295, and has a spring length smaller than the height of the valve chamber 295. The second spring 281, which is a short spring, applies a greater force to the shaft 213 toward the axis than a longer spring like the second spring 284 of the motor operated valve 120. In addition, as described above, as one end, closer to the second valve 297, of the second spring 281 is closer to the second valve element 288, the shaft 213 is more stably maintained toward the axis. In the motor operated valve 140 as well, the second spring 281 is located near the second valve element 288 and effectively applies a force biasing the shaft 213 toward the axis. Thus, lateral runout of the shaft 213 when the shaft 213 slides is reliably reduced.

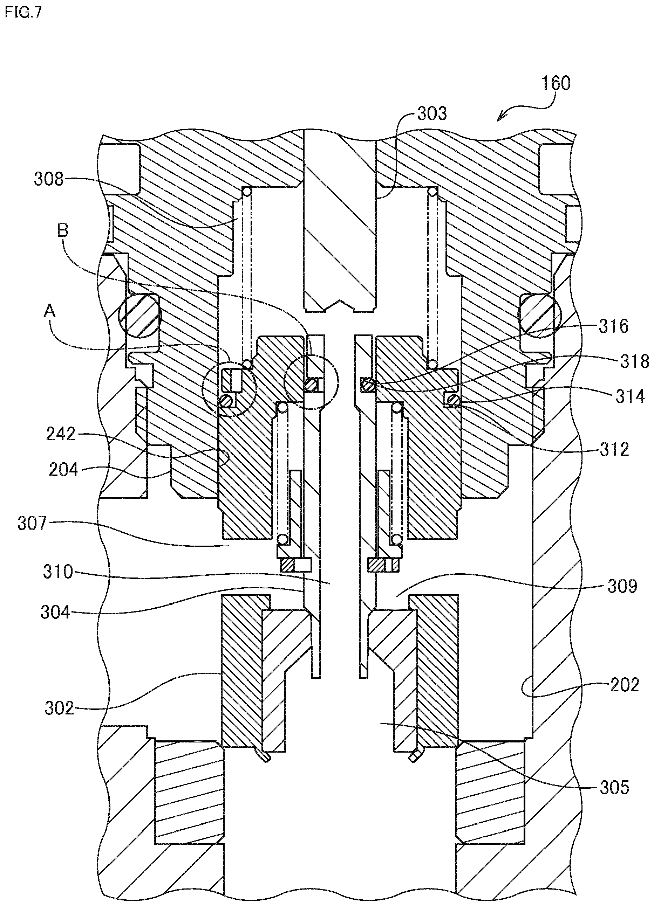

FIG. 7 is an enlarged cross-sectional view around valve sections of a motor operated valve 160 according to a modification of the second embodiment.

The motor operated valve 160 is different from the motor operated valve 140 of the second embodiment in the structures of the valve elements. In the motor operated valve 160, a first valve element 302 is provided on the inner side of the first body 202 and the second body 204, and a second valve element 304 is provided on the inner side of the first valve element 302. The second valve element 304 is also a lower end portion of a shaft 303. An inflow port 305 communicating with the inlet port 236 in FIG. 1 and an outflow port 307 communicating with the outlet port 238 in FIG. 1 are formed in the first valve element 302. A valve chamber 309 which accommodates the second valve element 304 and through which the inflow port 305 and the outflow port 307 communicate with each other is formed on the inner side of the first valve element 302. A back pressure chamber 308 is formed above the first valve element 302, and a communication passage 310 through which the inflow port 305 and the back pressure chamber 308 communicate with each other is formed on the inner side of the second valve element 304.

An annular, first fitting portion 312 is formed on the outer surface of the first valve element 302. A first seal ring 314 for sealing between the guiding passage 242 and the first valve element 302 is fitted into the first fitting portion 312. An annular, second fitting portion 316 is formed on the outer surface of the second valve element 304. A second seal ring 318 for sealing between the first valve element 302 and the second valve element 304 is fitted into the second fitting portion 316.

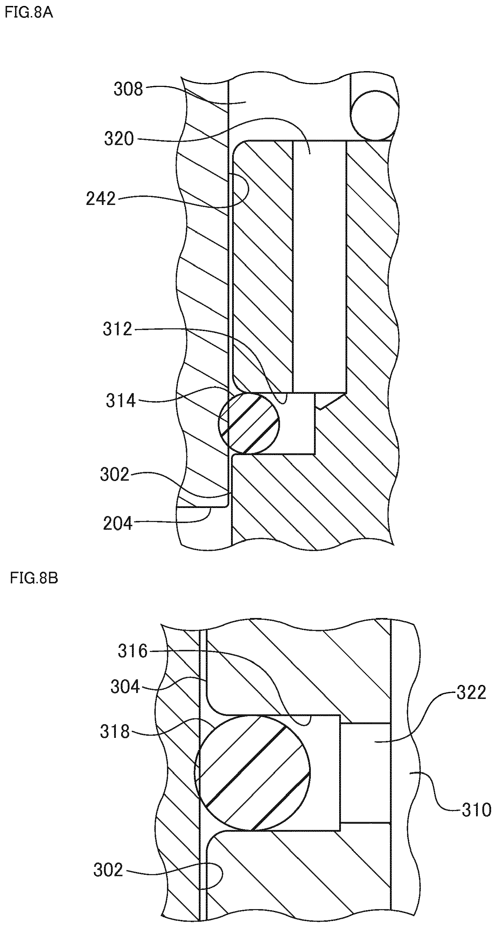

FIGS. 8A and 8B are enlarged cross-sectional views of FIG. 7. FIG. 8A is an enlarged cross-sectional view of part A in FIG. 7. FIG. 8B is an enlarged cross-sectional view of part B in FIG. 7.

At the first fitting portion 312, the guiding passage 242 has a contact surface coming in contact with the first seal ring 314. A first pressure introducing passage 320 communicating with the back pressure chamber 308 is formed at the first fitting portion 312 on a side opposite to the contact surface with respect to the first seal ring 314. Fluid flowing into the back pressure chamber 308 via the inflow port 305 and the communication passage 310 in FIG. 7 is introduced to a side of the first seal ring 314 opposite to the contact surface via the first pressure introducing passage 320. The fluid has an upstream pressure, which presses the first seal ring 314 toward the guiding passage 242. The upstream pressure brings the first seal ring 314 into secure contact with the contact surface of the guiding passage 242, which enables the first seal ring 314 to reliably seal between the guiding passage 242 and the first valve element 302. This prevents the upstream pressure present in the back pressure chamber 308 from leaking out to the outlet port 238 in FIG. 1 through between the first seal ring 314 and the guiding passage 242.

At the second fitting portion 316, the first valve element 302 has a contact surface coming in contact with the second seal ring 318. A second pressure introducing passage 322 communicating with the communication passage 310 is formed at the second fitting portion 316 on a side opposite to the contact surface with respect to the second seal ring 318. Fluid flowing through the communication passage 310 is introduced to a side of the second seal ring 318 opposite to the contact surface via the second pressure introducing passage 322. The introduced fluid has an upstream pressure, which presses the second seal ring 318 toward the contact surface of the first valve element 302. This enables the second seal ring 318 to reliably seal between the first valve element 302 and the second valve element 304, and prevents the fluid having the upstream pressure from leaking out to the valve chamber 309 through the communication passage 310.

The description of the present invention given above is based upon certain embodiments. The embodiments are intended to be illustrative only and it will be obvious to those skilled in the art that various modifications could be further developed within the technical idea underlying the present invention.

In the embodiments, the pressures of fluid in the upward and downward directions of the first valve element substantially cancel each other out. The pressure balance of the fluid, however, is not limited to the case where the pressures substantially cancel each other out. A pressure receiving surface of the upper part of the first valve element may be made larger than that of the lower part thereof so that the first valve reliably self-closes. In this case, the biasing force of a spring for biasing the first valve element in the self-closing direction can be made smaller.

In the embodiments, both of the members for biasing the first valve element and the second valve element in the valve closing direction are springs (the first spring and the second spring). The members for biasing the first valve element and the second valve element in the valve closing direction, however, are not limited to springs and may be any members ("biasing members"), such as a leaf spring and a rubber, that bias the valve elements in the valve closing direction.

In the embodiments, annular fitting portions are formed on the first valve element, and respective seal rings are fitted thereinto. The positions of the seal rings are not limited thereto, and a recess may be formed on the second body and a seal ring may be fitted thereinto. In this case, the outer surface of first valve element coming in contact with the seal ring is a contact surface, and lubricating plating may be applied to the contact surface. Similarly, for the structure for sealing between the second valve element and the first valve element, a recess may be formed on the inner side of the first valve element and a seal ring may be fitted thereinto. In this case, the outer surface of the second valve element coming in contact with the seal ring is a contact surface, and lubricating plating may be applied to the contact surface.

In the embodiments, lubricating plating is applied to the contact surfaces coming in contact with the seal rings. The lubricating surface treatment is not limited thereto, and any other surface treatment, such as coating, that reduces the sliding resistance of a seal ring may be applied.

## Claims

1. A motor operated valve (100, 120, 140, 160) comprising:
a body (202, 204) having an inlet port (236) through which a fluid is introduced from an upstream side, an outlet port (238) through which the fluid is delivered to a downstream side, a first valve hole (254) through which the inlet port (236) and the outlet port (238) communicate with each other, and a guiding passage (242) formed coaxially with the first valve hole (254);
a first valve element (246, 286, 302) having an inflow port (256, 292, 305) communicating with the inlet port (236), an outflow port (258, 293, 307) communicating with the outlet port (238), and a second valve hole (272) formed coaxially with the first valve hole (254) in a passage connecting the inflow port (256, 292, 305) with the outflow port (258, 293, 307), the first valve element (246, 286, 302) being slidably supported in the guiding passage (242) and moving toward and away from the first valve hole (254) to close and open a first valve (244, 291);
a motor (400) including a rotor (210) for driving the first valve element (246, 286, 302) in opening and closing directions of the first valve (244, 291);
a shaft (212, 213, 303) connected coaxially with the rotor (210);
a second valve element (250, 288, 304) provided integrally with the shaft (212, 213, 303) and coaxially with the first valve element (246, 286, 302), the second valve element (250, 288, 304) moving toward and away from the second valve hole (272) to close and open a second valve (248, 297);
a first spring (268, 271) to bias the first valve element (246, 286, 302) in a closing direction of the first valve (244, 291);
a second spring (280, 281, 284) provided coaxially with the first spring (268, 271), to bias the second valve element (250, 288, 304) in a closing direction of the second valve (248, 297);
a screw feed mechanism to convert rotational movement of the rotor (210) into translational movement of the shaft (212, 213, 303); and
an operably coupling mechanism to operably couple the first valve element (246, 286, 302) and the second valve element (250, 288, 304) in a manner that the first valve element (246, 286, 302) and the second valve element (250, 288, 304) can move integrally with each other when an amount by which the second valve element (250, 288, 304) is lifted is equal to or larger than a predetermined value.

2. The motor operated valve (100, 120, 140, 160) according to claim 1, wherein the second spring (280, 281, 284) is located between the first valve element (246, 286, 302) and the shaft (212, 213, 303).

3. The motor operated valve (100, 120, 140, 160) according to claim 1 or 2, further comprising a first seal ring (270, 298, 314) provided between the guiding passage (242) and the first valve element (246, 286, 302) .

4. The motor operated valve (100, 120, 140, 160) according to claim 3, wherein
a valve chamber (260, 295, 309) accommodating the second valve element (250, 288, 304) is formed on an inner side of the first valve element (246, 286, 302), a back pressure chamber (262, 294, 308) is formed on a side of the first valve element (246, 286, 302) opposite to the first valve hole (254),
the valve chamber (260, 295, 309) and the back pressure chamber (262, 294, 308) communicate with each other, and
a communication passage (256, 292, 305) through which the valve chamber (260, 295, 309) and the first valve hole (254) communicate with each other is formed at a position different from the second valve hole (272).

5. The motor operated valve (140, 160) according to claim 3 or claim 4, further comprising a second sealing (290, 318) provided between the first valve element (286, 302) and the second valve element (288, 304).

6. The motor operated valve (100, 120, 140, 160) according to any of claims 3 to 5, wherein the first seal ring (270, 298, 314) is fitted to one of the guiding passage (242) and the first valve element (246, 286, 302), and lubricating surface treatment is applied to a contact surface of the other of the guiding passage (242) and the first valve element (246, 286, 302) coming in contact with the first seal ring (270, 298, 314).

7. The motor operated valve (160) according to any of claims 3 to 6, wherein the first seal ring (314) is fitted to one of the guiding passage (242) and the first valve element (302), the other of the guiding passage (242) and the first valve element (302) comes in contact with the first seal ring (314), and a pressure introducing passage (320) for introducing upstream pressure in the first valve hole (254) is formed on a surface of the one of the guiding passage (242) and the first valve element (302) on a side opposite to the contact surface coming in contact with the first seal ring (314).

8. The motor operated valve (140, 160) according to claim 5 or any of claims 6 to 7 in reference back to claim 5, wherein the second sealing (290, 318) is fitted to one of the first valve element (286, 302) and the second valve element (288, 304), and lubricating surface treatment is applied to a contact surface of the other of the first valve element (286, 302) and the second valve element (288, 304) coming in contact with the second sealing (290, 318).

9. The motor operated valve (160) according to claim 5 or any of claims 6 to 7 in reference back to claim 5, wherein the second sealing (318) is fitted to one of the first valve element (302) and the second valve element (304), the other of the first valve element (302) and the second valve element (304) comes in contact with the second sealing (318), and a pressure introducing passage (322) for introducing upstream pressure in the first valve hole (254) is formed on a surface of the one of the first valve element (302) and the second valve element (304) on a side opposite to the contact surface coming in contact with the second sealing (318).
